# EUROPEAN PATENT APPLICATION

(11) **EP 2 239 981 A1**
(43) Date of publication of application: **13.10.2010**
(21) Application number: 08873784.6
(22) Date of filing: 26.12.2008
(51) Int. Cl.: H04W 36/14

(54) **METHOD FOR USER EQUIPMENT REALIZING HANDOFF ACROSS ACCESS NETWORKS IN ACTIVE STATE**

(30) Priority: 04.04.2008 CN 200810090821
(71) Applicant: ZTE Corporation, Shenzhen, Guangdong 518057 (CN)
(72) Inventor: YU, Zhiming, Shenzhen Guangdong 518057 (CN); YOU, Shilin, Shenzhen Guangdong 518057 (CN); GENG, Liping, Shenzhen Guangdong 518057 (CN)
(74) Representative: Haverkamp, Jens
(86) International application number: PCT/CN2008/073783
(87) International publication number: WO 2009/121237

(57) **Abstract**

A method for user equipment realizing handover across access networks in active state includes: during the process for a user equipment in active state handing over from an evolved packet system to a universal mobile telecommunications system or a global system for mobile communications, an evolved universal mobile telecommunication system radio access network notifies the user equipment whether this handover is a handover due to an incoming call of a circuit switched domain before informing the user equipment of performing the handover or when informing the user equipment of performing the handover; the user equipment will send a paging response message to a mobile switching center/visitor location register after handing over to the universal mobile telecommunications system or the global system for mobile communications if this handover is a handover due to an incoming call of the circuit switched domain. By using the present invention, it will help to the successful establishment of the circuit switched call after handover, and it can avoid the waste of circuit switched network resources.

## Description

### TECHNICAL FIELD

This invention relates to the field of mobile communications, and relates more specifically to a method for user equipment realizing handover to 2G/3G networks in Evolved Packet Domain Networks in active state.

### BACKGROUND

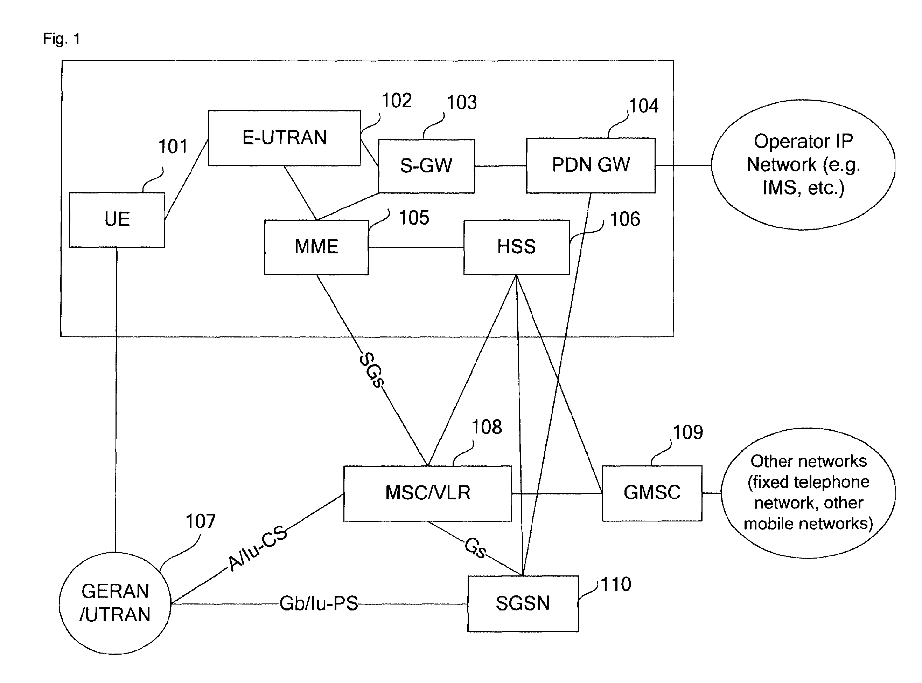

In order to maintain a strong competitive power of third-generation mobile communication systems in the mobile communication field, the network performance of the third-generation mobile communication systems must be improved, and the network building and operating costs of that must be reduced. Therefore, the standardization workgroup for the 3^{rd} Generation Partnership Project (3GPP) is dedicated to studying the evolvement of packet switched core (PS core) network and universal mobile telecommunication system radio access network (UTRAN), so as to make the evolved PS core (EPC) provide a higher transmission rate and a shorter transmission delay and support mobility management among an evolved UTRAN (E-UTRAN), a GSM EDGE radio access network (GERAN) (where GSM is the abbreviation for global system for mobile communications, and EDGE is the abbreviation for enhanced data rate for GSM evolution), a UTRAN, a wireless local area network (WLAN) and other non-3GPP access networks. This evolved mobile communication system is named as evolved packet system (EPS), the basic structure of which is shown as in the dashed frame in Fig. 1. The entities in Fig. 1 are described as follows:

A user equipment (UE) 101: a terminal able to access radio networks of two types is called as a double-mode terminal. According to the ability to access radio networks at the same time, double-mode terminals are classified into single-radio-access and double-radio-access terminals. The former can only access a radio network of one type at the same time, while the latter can access radio access networks of two types at the same time.

The E-UTRAN 102 is evolved UTRAN, being able to provide higher uplink and downlink rates, shorter transmission delays and more reliable radio transmission.

A serving gateway (S-GW) 103 is a user plane entity, being responsible for routing the data of the user plane.

A packet data network gateway (PDN GW or P-GW) 104 is responsible for gateway functions for the UE accessing the PDN (Packet Data Network). The P-GW and S-GW may be set together in one physical entity.

A mobility management entity (MME) 105 is a control plane entity and a server used for storing user data temporarily, being responsible for managing and storing UE contexts (such as a UE/user ID, a mobility management state, user security parameters, etc), allocating temporary user lDs, and authenticating the UE when the UE is located in this tracking area or this network.

A home subscriber server (HSS) 106 has the function of a home location register (HLR), storing all users' basic data and service data.

An IP (Internet Protocol) multimedia subsystem (IMS) is a network architecture proposed by 3GPP based on the IP. It constructs an open and flexible service environment, supports multimedia application, and provides diversified multimedia services for users. IMS is IP-based communication network architecture irrelevant with access technology. It can provide services for the GSM, a UMTS (universal mobile telecommunications system) and other mobile beehive networks besides the EPS, a GPRS (general packet radio service), a WLAN (wireless local area network) and other packet access networks.

A GERAN/UTRAN 107 is a radio access network for conventional GSM/UMTS networks.

A mobile switching center (MSC)/ visitor location register (VLR) 108.

A gateway mobile switching center (GMSC) 109.

A serving GPRS support node (SGSN) 110 is a control network element for GPRS networks, and is used primarily for recording the location information of the UE, sending and receiving mobile packet data between the UE and a gateway GPRS supporting node (GGSN).

When the UE accesses GSM/UMTS networks, user's basic voice services or supplementary services based on the voice services are provided via circuit switched (CS) Domain. The MSC/VLR and GMSC in Fig. 1 are network elements of the CS Domain. The users can implement the services such as voice call via the CS Domain with the users in their home network or other networks (e.g. fixed telephone network or other mobile networks). IP service for users is provided via a PS (packet switch) domain. The SGSN in Fig. 1 is a PS domain network element. The users access a packet data network via the PS Domain. The IP network provided by operators as shown in Fig. 1 is a packet data network.

In the existing technology, the interface between the MSC/VLR and the SGSN is called as Gs interface. The Gs interface establishes a Gs association between the MSC/VLR and the SGSN (i.e. the VLR number is stored in the SGSN and the SGSN number is stored in the VLR), and the MSC/VLR pages the called UE via the PS domain after the Gs association is established.

The Gs association is established via a combined location updating process. The combined location updating means that when the UE which is able to attach to both the CS domain and the PS domain updates the route area in the PS domain, and if the network supports the Gs interface, the UE will make an ID included in a route area updating message to make SGSN trigger CS location updating process, in which way, a location area update is contained in the route area updating process of the PS domain; after the combined location updating is finished, the Gs association is established between the SGSN and the VLR. When the UE moves in networks to make the SGSN changed, a new SGSN will be updated into the VLR in time via the combined location updating process.

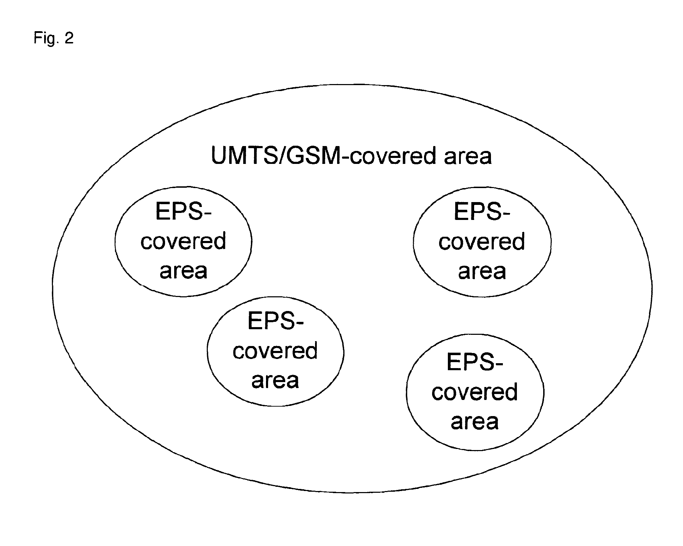

When the UE accesses the EPS network, users' basic voice services and supplementary services based on the voice service are controlled via the IMS. The EPS in itself does not provide and control any voice call services, but only provides the carrying for IP data. But when deploying the EPS networks, as shown in Fig. 2, some operators only deploy the EPS networks in some key areas already covered by the UMTS/GSM networks to provide high speed IP data services for the users without deploying (or without the intention of deploying) IMS. In this scenario, the voice call services can be provided via nothing but the CS domain fully covered by UMTS/GSM networks. In such a way, the users can't make the voice call services when the single radio double-mode terminals access the EPS networks. To ensure that the users can make voice calls, the existing solution is that when a voice call is being made, the UE hands over from the EPS network to the UMTS/GSM network to accomplish the voice service in the CS domain of the UMTS/GSM; the ongoing IP service proceeded by the users in the EPS network is handed over to the PS domain of the UMTS/GSM network, and if the ongoing IP service can't be handed over to the PS domain of the UMTS/GSM, it will be suspended or released in the EPS network.

In the existing technology, an interface called as SGs (as shown in Fig. 1) similar to the Gs is led in between the MME and the MSC/VLR. When the UE starts up and accesses the EPS network, a Gs association is established between the MME and the MSC/VLR via the SGs interface (the VLR number is stored in the MME and the MME number is stored in the VLR). Later, when the user moves in the network, the user's latest location information will be updated to the MME, and if the MME changes, the MME information stored in the VLR will also be updated, so that the MME information stored in the VLR will always be accurate.

From the description as above, it can be summed up that there is two scenarios in which the UE hands over from the EPS to the UMTS/GSM in active state. In one scenario, the UE has an incoming call and it needs to hand over the IP service to the UMTS/GSM packet network, so that the UE can make voice calls. In another scenario, the UE needs to hand over the IP service to the UMTS/GSM packet network when leaving the EPS-covered area.

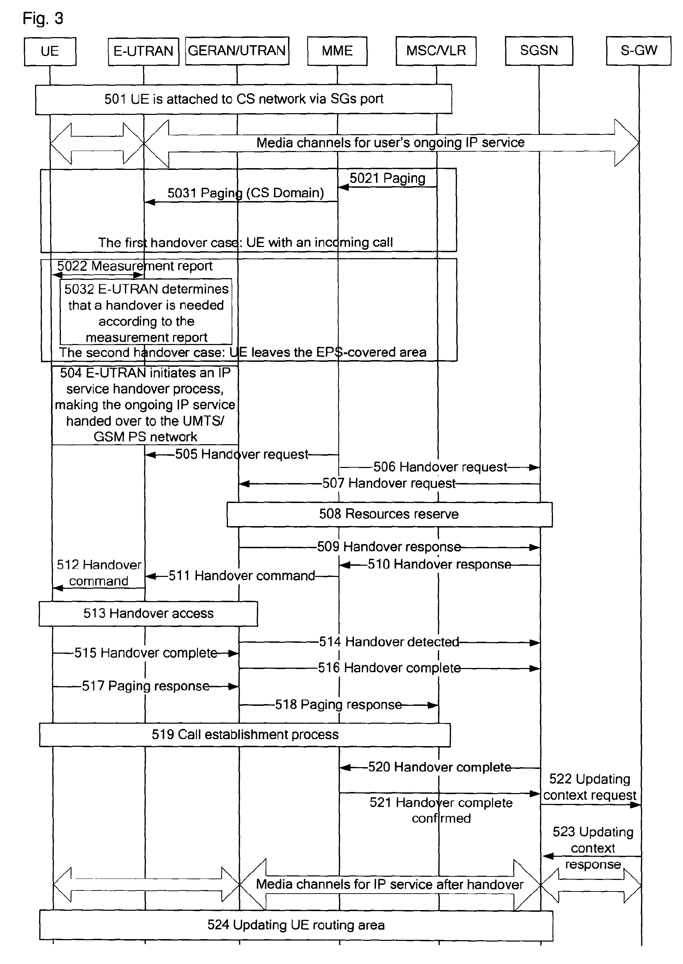

In the existing technology, the process for the UE handing over from the EPS to the UMTS/GSM is shown as in Fig. 3, including the following steps:
step 501, the UE assesses the EPS network. The Gs association has been established between the MME and the MSC/VLR. The UE has registration information in both the MSC/VLR and the MME. The UE is in active state (e.g. it's proceeding IP service);
for the first handover scenario,
step 5021, the MSC/VLR receives an incoming call request and starts to page the called user's UE. The MSC/VLR sends a CS paging message to the MME according to the Gs association information stored in the VLR;
step 5031, the MME receives the CS paging request message (also called as paging message) sent from the MSC/VLR and starts to page the UE and send a CS paging message to the E-UTRAN; after receiving the CS paging request message sent from the MME, the E-UTRAN determines the UE has an ongoing IP service and a handover is needed (before a handover is initiated, the E-UTRAN may request the UE to send a measurement report so that the UE can hand over to a suitable target cell. These are all existing technology, details of which are omitted here);
for the second handover scenario,
step 5022, the UE sends a measurement report to the E-UTRAN;
step 5032, according to the information such as the received measurement report and local strategy etc., the E-UTRAN determines that the UE is about to leave the EPS- covered area and a handover is needed;
after that, the following steps should be executed in both scenarios:
step 504, the E-UTRAN initiates an IP service handover process so that the on-going IP service is handed over to the UMTS/GSM PS network;
step 505, the E-UTRAN initiates a handover to the PS network and sends a handover request message to the MME;
step 506-507, the MME sends a handover request message to the SGSN according to the handover request message received. After receiving the message, the SGSN finds the corresponding GERAN/UTRAN according to the target cell information in the message and sends a handover request message to the corresponding GERAN/UTRAN;
step 508, the GERAN/UTRAN completes resource allocation, namely reserves resources for the UE, so that the service can be resumed after the UE completes the handover;
step 509-510, the GERAN/UTRAN returns a handover response to the SGSN and the SGSN returns a handover response to the MME after receiving the handover response;
step 511-512, the MME sends a handover command to the E-UTRAN after receiving the handover response, and the E-UTRAN then sends a handover command to the UE to make the UE hand over to the target GERAN/UTRAN;
step 513-516, the UE accesses the target GERAN/UTRAN to complete handover and the SGSN receives a handover complete message;
step 517, the UE sends a paging response to the GERAN/UTRAN after completing handover (i.e. after sending a handover complete message to the GERAN/UTRAN);
step 518, the GERAN/UTRAN forwards the paging response to the MSC/VLR after receiving the paging response;
step 519, the MSC/VLR completes the process for establishing the called call process (it is an existing process, details of which are omitted here) after receiving the paging response;
step 520-521, the SGSN sends a handover complete message to the MME after receiving the handover complete message sent from the GERAN/UTRAN; the MME returns a handover complete confirmation message;
step 522-523, the SGSN updates context information in the S-GW, so that IP data stream will be transmitted from the PS network to the UE, as shown at the thick arrow in the figure;
step 524, when the UE completes the handover and can send uplink data, a routing area updating may be initiated to update location information of the UE in the PS network.

It can be seen from the process above, in the existing method for UE in active state realizing handover, in either of the handover scenarios, the UE sends a CS paging response to the MSC/VLR after the IP service handover is complete. In such a way, the second handover scenario not only leads to the waste of the CS network resources, but also brings the following problem: if the user initiates a CS call or an incoming call of the CS is made at the moment, the call will fail because the user already has a call being established/released.

To solve the problem as above, it needs to provide the CS paging information to the UE so that the UE can identify whether there is an incoming call of the CS.

### SUMMARY

This invention provides a method for user equipment realizing handover across access networks in active state, which is used for the UE to hand over IP service from the EPS to the UMTS/GSM and will help to the successful establishment of CS calls after the handover, and it can avoid the waste of the CS network resources.

The technical solution adopted in this invention is that: a method for user equipment realizing handover across access networks in active state, which includes:
during the process for a user equipment (UE) in active state handing over from an evolved packet system (EPS) to a universal mobile telecommunications system or a global system for mobile communications (UMTS/GSM), an evolved universal mobile telecommunication system radio access network (E-UTRAN) notifies the UE whether this handover is a handover due to an incoming call of a circuit switched (CS) domain before informing the UE of performing the handover or when informing the UE of performing the handover; and
the UE will send a paging response message to a mobile switching center/visitor location register (msc/vlr) after handing over to the UMTS/GSM if this handover is a handover due to an incoming call of the CS domain.

Further, the E-UTRAN may notify the UE whether this handover is a handover due to an incoming call of the CS domain before informing the UE of performing the handover in the following way: the E-UTRAN may send a CS paging request message to the UE if the E-UTRAN receives a CS paging request message sent from a MME; after receiving the CS paging request message, the UE may know that this handover is a handover due to an incoming call of the CS domain and caches CS paging information, wait for a subsequent handover command to be sent from the E-UTRAN, and send a paging response message to the MSC/VLR after handing over to the UMTS/GSM.

Further, the E-UTRAN will not send a CS paging request message to the UE if this handover is not a handover due to an incoming call of the CS domain, namely the E-UTRAN may have not received a CS paging response message sent from the MME; if there is no CS paging message cached locally, the UE will not send a paging response message to the MSC/VLR after handing over to the UMTS/GSM when receiving the handover command.

Further, the E-UTRAN may notify the UE whether this handover is a handover due to an incoming call of the CS domain in a measurement notification message or a handover command sent to the UE.

Further, indicating information expressing whether this handover is a handover due to an incoming call of the CS domain may be included in the measurement notification message or the handover command sent from the E-UTRAN to the UE;
after receiving the measurement notification message or the handover command, the UE will know whether this handover is a handover due to an incoming call according to the indicating information and cache the indicating information.

Further, if this handover is a handover due to an incoming call of the CS domain, the E-UTRAN may make the indicating information expressing whether this handover is a handover due to an incoming call of the CS domain included in the measurement notification message or the handover command; if the indicating information is not included, this handover may be not a handover due to an incoming call of the CS domain;
the UE will know whether this handover is a handover due to an incoming call of the CS domain according to whether the indicating information is included in the measurement notification message or the handover command received.

Further, the indicating information may be an indicating bit expressing handover type; when this indicating bit is set as 0 or 1, it may mean this handover is a handover due to an incoming call of the CS domain; when this indicating bit is set as 1 or 0, it may mean this handover is not a handover due to an incoming call of the CS domain.

Further, when it's indicated that this handover is a handover due to an incoming call of the CS domain, the indicating information included in the measurement notification message or the handover command sent from the E-UTRAN to the UE may be a CS paging message.

Further, the UE may access a EPS network; voice call services of the UE may be provided via the CS domain of the UMTS/GSM network; a Gs association may have been established between the MME and the MSC/VLR; the UE may have registration information in both the MSC/VLR and the MME and the UE is in active state;
the UE may send a measurement report to the E-UTRAN; according to the information such as the received measurement report and local strategy etc., the E-UTRAN may determine that the UE is about to leave the EPS-covered area and determine that it needs to hand over IP service to the UMTS/GSM packet network and this handover is not a handover due to an incoming call of the CS domain.

Further, the UE may access a EPS network; voice call services of the UE may be provided via the CS domain of the UMTS/GSM network; a Gs association may have been established between the MME and the MSC/VLR; the UE may have registration information in both the MSC/VLR and the MME and the UE may be in active state;
the MSC/VLR may receive an incoming call request and send a CS paging message to the MME according to the Gs association stored; the MME may send a CS paging message to the E-UTRAN after receiving the CS paging message; after receiving the CS paging request message sent from the MME, if the UE has an ongoing IP service, the E-UTRAN will determine that it needs to hand over IP service to the UMTS/GSM packet network and this handover is a handover due to an incoming call of the CS domain.

In summary of the above, by using the method of this invention, the UE in active state realizes handover and decides whether to send a paging response to the MSC/VLR after handover according to whether there is actually an incoming call. The method of this invention not only satisfies application requirements, but also makes the MSC processing remain unchanged, and helps the quick application of the EPS network and successful establishment of the CS call after handover.

### BRIEF DESCRIPTION OF THE DRAWINGS

Fig. 1 is a framework chart showing the entities of this invention. The part framed with dotted lines in the figure is the basic network structure chart of the EPS in the existing technology;
Fig. 2 is a schematic diagram showing a case of the coverage of the EPS network and the UMTS/GSM network in deployment of the EPS network, also a network deployment scenario in circuit switched domain fall-back scenario;
Fig. 3 is a process chart showing the UE in active state completes handover in the EPS of the existing technology; and
Fig. 4 is a signaling process chart showing three specific embodiments of this invention. The E-UTRAN sends a handover type instruction to the UE via a message (e.g. a paging request message or measurement notification message or handover command message), and the UE decides whether to send a paging response message to the MSC/VLR according to the handover type instruction after handing over to the UMTS/GSM network successfully.

### DETAILED DESCRIPTION

In the following, the technical solution of this invention will be described in further detail with the accompanying drawings and embodiments.

This invention provides a method for user equipment realizing handover across access networks in active state. During the process for an UE in active state handing over from an EPS to a UMTS/GSM, an E-UTRAN notifies the UE whether this handover is a handover due to an incoming call of a CS domain before informing the UE of performing the handover or when informing the user equipment of performing the handover; if this handover is a handover due to an incoming call of the CS domain, the UE will send a paging response message to a mobile switching center/visitor location register after handing over to the UMTS/GSM.

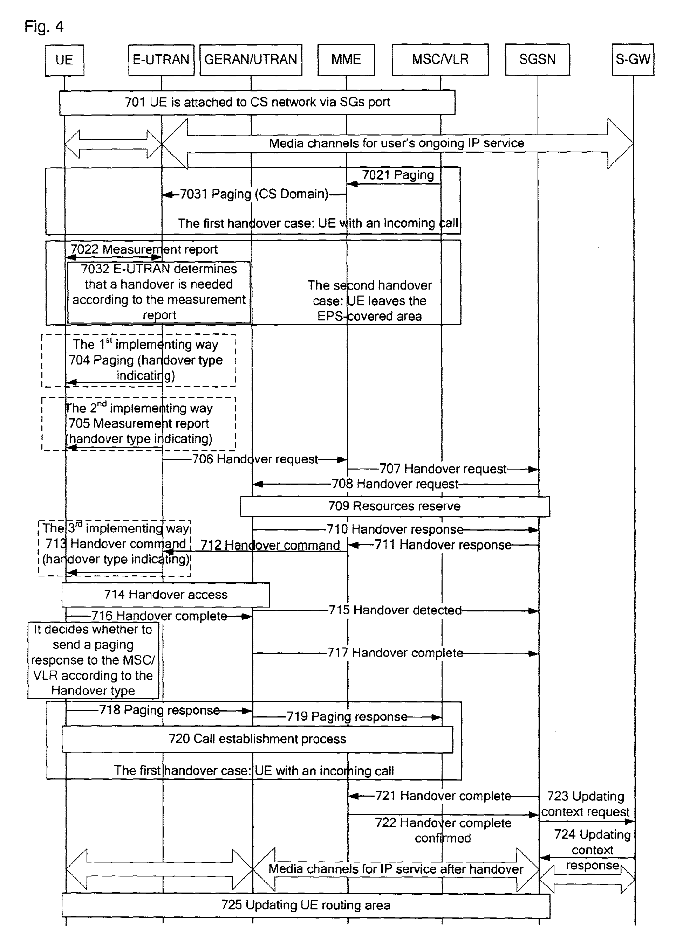

Fig. 4 is a schematic diagram showing an embodiment of this invention. In this embodiment, the E-UTRAN adds handover type indicating information into a message (e.g. a paging request message or a measurement notification message or a handover command message) sent to the UE, so as to pass handover scenario information to the UE. After handing over to the UMTS/GSM network successfully, the UE determines whether to send a CS paging response message to the MSC/VLR according to the handover type indicating information. The steps are as follows:
step 701, the UE accesses the EPS network. The Gs association has been established between the MME and the MSC/VLR. The UE has registration information in both the MSC/VLR and the MME. The UE is in active state (i.e. it's proceeding the IP service);
for the first handover scenario,
step 7021, the MSC/VLR receives an incoming call request and starts to page the called user's UE. The MSC/VLR sends a CS paging request message to the MME according to the Gs association information stored in the VLR;
step 7031, the MME receives the CS paging request message sent from the MSC/VLR and starts to page the UE and sends a CS paging request message to the E-UTRAN. After receiving the CS paging request message sent from the MME, the E-UTRAN determines the UE has an ongoing IP service and a handover is needed (before a handover is initiated, the E-UTRAN may request the UE to send a measurement report so that the UE can hand over to a suitable target cell. These are all existing technology, the details of which are omitted here);
for the second handover scenario,
step 7022, the UE sends a measurement report to the E-UTRAN;
step 7032, according to the information such as the received measurement report and local strategy etc., the E-UTRAN determines the UE is about to leave the EPS-covered area and a handover is needed;
steps 704 and 705 are two implementing ways for the E-UTRAN informing the UE of performing the handover. In reality, only one of them is adopted.
step 704, for the first handover scenario, the E-UTRAN sends a CS paging request message to the UE after receiving the CS paging request message sent from the MME. After receiving the paging request, the UE knows the handover is a handover due to an incoming call. At this moment, as the UE has an ongoing IP service which needs to be handed over to the UMTS/GSM PS network, the UE cashes the CS paging information (indicating its receipt of paging) and waits for a subsequent handover command rather than hands over to the UMTS/GSM network immediately; in this way, when receiving a handover command, if there is any CS paging information in local cache, the UE will send a paging response message to the MSC/VLR after handing over to the UMTS/GSM;
for the second handover scenario, there is no such step, namely the E-UTRAN will not send a CS paging request message to the UE and the UE will not cache the paging information; when a handover command is received later, as there is no CS paging information in local cache, this handover can well be processed as a handover not due to an incoming call (regular PS handover) without any special procedures;
step 705, for the first handover scenario, after receiving the CS paging request message sent from the MME, the E-UTRAN requests the UE to send a measurement report; the E-UTRAN sends a measurement notification message to the UE, informing the UE that this handover is a handover due to an incoming call of the CS domain via this measurement notification message; the UE knows this handover is a handover due to an incoming call after receiving the measurement notification message; for the second handover scenario, the E-UTRAN informs the UE that this handover is not a handover due to an incoming call of the CS domain by sending a measurement notification message to the UE;
there are many ways to inform the UE of the handover type of this handover via the measurement notification message. One of the ways is to carry indicating information, i.e. handover type indicating information, expressing whether this handover is a handover due to an incoming call of the CS domain in the measurement notification message (the indicating information is called as CS paging information when it indicates this handover is a handover due to an incoming call of the CS domain). For example, an indicating bit expressing the handover type can be added. When this indicating bit is set as 0 (or 1), it means this handover is a handover due to an incoming call of the CS domain; when this indicating bit is set as 1 (or 0), it means this handover is not a handover due to an incoming call of the CS domain. After receiving the measurement notification message, the UE will know whether this handover is a handover due to an incoming call according to this indicating information and may cache the indicating information. Another way is that the indicating information expressing whether this handover is a handover due to an incoming call of the CS domain, namely the CS paging information, will be included in the measurement notification message if this handover is a handover due to an incoming call of the CS domain, and it means this handover is not a handover due to an incoming call of the CS domain if no such indicating information is included; the UE will know whether this handover is a handover due to an incoming call of the CS domain according to whether such indicating information is included in the measurement notification message, and may cache the indicating information.

At this moment, as the UE has an ongoing IP service which needs to be handed over to the UMTS/GSM PS network, the UE waits for a subsequent handover command sent from E-UTRAN rather than hands over to the UMTS/GSM network immediately. After receiving the measurement notification message, the UE measures information of adjacent cells (such as a signal intensity etc.) and sends a measurement report to the E-UTRAN, and the E-UTRAN will determine a target cell list according to the measurement report.
Step 706, the E-UTRAN initiates a handover to the PS network and sends to the MME a handover request message including target cell information;
step 707-708, the MME sends a handover request message to the SGSN according to the handover request message received. After receiving the message, the SGSN finds the corresponding GERAN/UTRAN according to the target cell information in the message and sends a handover request message to the GERAN/UTRAN;
step 709, the GERAN/UTRAN completes resource allocation, namely reserves resources for the UE, so that the service can be resumed after the UE completes the handover;
step 710-711, the GERAN/UTRAN returns a handover response to the SGSN, and the SGSN returns a handover response to the MME, informing the MME that the target PS network is ready for handover;
step 712, the MME sends a handover command to the E-UTRAN after receiving the handover response, and then the E-UTRAN sends a handover command to the UE to make the UE hand over to the target GERAN/UTRAN;
step 713, the E-UTRAN sends a handover command to the UE after receiving the handover command sent from the MME to make the UE hand over to the target GERAN/UTRAN;
in a third implementing way, the E-UTRAN informs the UE whether this handover is a handover due to an incoming call of the CS domain by sending a handover command to the UE rather than by sending a measurement notification message as in step 705. After receiving this handover command, the UE knows whether this handover is a handover due to an incoming call and takes correct processing after the handover is completed. The way to inform the UE of the handover type of this handover by sending a handover command may be the same as the way to inform the UE of the handover type by sending a measurement notification message as in step 705.
Step 714-717, the UE accesses the target GERAN/UTRAN and completes the handover, and the SGSN receives a handover complete message;
after completing the PS handover process, the UE decides whether to send a paging response message to the MSC/VLR according to the handover type. In actual applications, in order to reduce unnecessary information transmission, in the second handover scenario, the E-UTRAN may not send any special instruction to the UE, and at this moment, the UE may deal with the handover as a handover not due to an incoming call (i.e. regular PS handover) and will not send any paging response message after completing the handover.

The following steps 717-720 correspond to the first handover scenario. None of these steps exists in the second handover scenario.
Step 718, since the UE has known this handover is a handover due to an incoming call of the CS domain after completing the handover (i.e. sending a handover complete message to the GERAN/UTRAN), the UE will send a paging response to the GERAN/UTRAN accordingly;
step 719, the GERAN/UTRAN forwards the paging response to the MSC/VLR after receiving the paging response;
step 720, the MSC/VLR completes the process for establishing the called call process (that is an existing process, details of which are omitted here) after receiving the paging response;
steps 721-722, the SGSN sends a handover complete message to the MME after receiving the handover complete message sent from the GERAN/UTRAN; and the MME returns a handover complete confirmation message;
steps 723-724, the SGSN updates context information in the S-GW, so that IP data stream can be transmitted from the PS network to the UE, as shown at the thick arrow in the figure;
step 725, when the UE completes the handover and can send upward data, a routing area updating may be initiated to update location information of the UE in the PS network and also update the Gs association information.

In detailed implementation, if the E-UTRAN informs the UE of the handover type via other messages before sending a handover command message (e.g. the first and second implementing ways), the UE can set a short timer (e.g. 5 seconds) after receiving and caching the handover type indicating information; if after the timer times out, the UE still doesn't receive any handover command sent from the E-UTRAN (see step 713) and the handover is a handover due to an incoming call, the UE can directly hand over to the UMTS/GSM and send a paging response message to the MSC/VLR.

It can be seen from Fig. 4 that, for the handover which is not a handover due to an incoming call, the UE does not generate a CS call process after the IP service is handed over to the UMTS/GSM, and the UE is in idle state in the CS network, therefore, the users can make voice calls or receive incoming calls normally.

In summary of the above, by using the method of this invention, the UE in active state realizes handover and decides whether to send a paging response to the MSC/VLR after handover according to whether there is actually an incoming call. The method of this invention not only satisfies application requirements, but also makes the MSC processing remain unchanged and helps the quick application of the EPS network.

Of course, this invention may have many other embodiments. On the precondition that the essence of this invention is not deviated, for those skilled in the art, various modifications and changes can be made to the present invention, but all of such relevant modifications and changes are within the scope of protection of claims attached to this invention.

### Industrial Applicability

By using the method of this invention, the UE in active state realizes handover and decides whether to send a paging response to the MSC/VLR after handover according to whether there is actually an incoming call. The method of this invention not only satisfies application requirements, but also makes the MSC processing remain unchanged and helps the quick application of the EPS network.

## Claims

1. A method for user equipment realizing handover across access networks in active state, including:
during the process for a user equipment (UE) in active state handing over from an evolved packet system (EPS) to a universal mobile telecommunications system or a global system for mobile communications (UMTS/GSM), an evolved universal mobile telecommunication system radio access network (E-UTRAN) notifying the UE whether this handover is a handover due to an incoming call of a circuit switched (CS) domain before informing the UE of performing the handover or when informing the UE of performing the handover; and
the UE sending a paging response message to a mobile switching center/visitor location register (MSC/VLR) after handing over to the UMTS/GSM if this handover is a handover due to an incoming call of the CS domain.

2. The realizing method as claimed in claim 1, wherein
the E-UTRAN notifies the UE whether this handover is a handover due to an incoming call of the CS domain before informing the UE of performing the handover in the following way: the E-UTRAN sends a CS paging request message to the UE if the E-UTRAN receives a CS paging request message sent from a MME; after receiving the CS paging request message, the UE knows that this handover is a handover due to an incoming call of the CS domain and caches CS paging information, waits for a subsequent handover command to be sent from the E-UTRAN, and sends a paging response message to the MSC/VLR after handing over to the UMTS/GSM.

3. The realizing method as claimed in claim 2, wherein
the E-UTRAN will not send a CS paging request message to the UE if this handover is not a handover due to an incoming call of the CS domain, namely the E-UTRAN has not received a CS paging response message sent from the MME; if there is no CS paging message cached locally, the UE will not send a paging response message to the MSC/VLR after handing over to the UMTS/GSM when receiving the handover command.

4. The realizing method as claimed in claim 1, wherein
the E-UTRAN notifies the UE whether this handover is a handover due to an incoming call of the CS domain in a measurement notification message or a handover command sent to the UE.

5. The realizing method as claimed in claim 4, wherein
indicating information expressing whether this handover is a handover due to an incoming call of the CS domain is included in the measurement notification message or the handover command sent from the E-UTRAN to the UE;
after receiving the measurement notification message or the handover command, the UE will know whether this handover is a handover due to an incoming call according to the indicating information and cache the indicating information.

6. The realizing method as claimed in claim 4, wherein
if this handover is a handover due to an incoming call of the CS domain, the E-UTRAN make the indicating information expressing whether this handover is a handover due to an incoming call of the CS domain included in the measurement notification message or the handover command; if the indicating information is not included, this handover is not a handover due to an incoming call of the CS domain;
the UE will know whether this handover is a handover due to an incoming call of the CS domain according to whether the indicating information is included in the measurement notification message or the handover command received.

7. The realizing method as claimed in claim 5, wherein
the indicating information is an indicating bit expressing handover type; when this indicating bit is set as 0 or 1, it means this handover is a handover due to an incoming call of the CS domain; when this indicating bit is set as 1 or 0, it means this handover is not a handover due to an incoming call of the CS domain.

8. The realizing method as claimed in claim 5, wherein
when it's indicated that this handover is a handover due to an incoming call of the CS domain, the indicating information included in the measurement notification message or the handover command sent from the E-UTRAN to the UE is a CS paging message.

9. The realizing method as claimed in any of claims 1 to 8, wherein
the UE accesses a EPS network; voice call services of the UE are provided via the CS domain of the UMTS/GSM network; a Gs association has been established between the MME and the MSC/VLR; the UE has registration information in both the MSC/VLR and the MME and the UE is in active state;
the UE sends a measurement report to the E-UTRAN; according to the information such as the received measurement report and local strategy etc., the E-UTRAN determines that the UE is about to leave the EPS-covered area and determine that it needs to hand over IP service to the UMTS/GSM packet network and this handover is not a handover due to an incoming call of the CS domain.

10. The realizing method as claimed in any of claims 1 to 8, wherein
the UE accesses a EPS network; voice call services of the UE are provided via the CS domain of the UMTS/GSM network; a Gs association has been established between the MME and the MSC/VLR; the UE has registration information in both the MSC/VLR and the MME and the UE is in active state;
the MSC/VLR receives an incoming call request and sends a CS paging message to the MME according to the Gs association stored; the MME sends a CS paging message to the E-UTRAN after receiving the CS paging message; after receiving the CS paging request message sent from the MME, if the UE has an ongoing IP service, the E-UTRAN will determine that it needs to hand over IP service to the UMTS/GSM packet network and this handover is a handover due to an incoming call of the CS domain.
